# FASCICULE DE BREVET EUROPEEN

(11) **EP 2 206 944 B1**
(45) Date de publication et mention de la délivrance du brevet: **27.07.2016**
(21) Numéro de dépôt: 09354055.7
(22) Date de dépôt: 30.12.2009
(51) Int. Cl.: F21L 4/00, H01M 2/10

(54) **Dispositif d'alimentation par accumulateur ou piles d'une lampe électrique portative, et lampe équipée d'un tel dispositif**
Stromversorgungsvorrichtung einer tragbaren elektrischen Leuche mit Akku oder Batterien und eine mit einer solchen Vorrichtung ausgestattete Leuchte
Accumulator or battery power supply device of an electrical portable lamp and lamp provided with such a device

(30) Priorité: 12.01.2009 FR 0900102
(43) Date de publication de la demande: 14.07.2010
(73) Titulaire: Zedel, 38920 Crolles (FR)
(72) Inventeur: Martin, Grégory, 38420 Domène (FR); Piu, Frédéric, 38530 Pontcharra (FR); Petzl, Paul, 38530 Barraux (FR)
(74) Mandataire: Hecké, Gérard

(56) Documents cités:
- FR-A1- 2 650 123
- US-A- 4 977 042
- US-A- 5 600 223

## Description

### Domaine technique de l'invention

L'invention est relative à un dispositif d'alimentation par accumulateur ou piles d'une lampe d'éclairage électrique portative, ledit dispositif étant composé:
- d'un boîtier avant renfermant un système de contacts électriques destinés à être connecté au module d'éclairage,
- d'un boîtier arrière conformé en couvercle,
- et d'un système de fixation comprenant des premiers moyens d'articulation et des premiers moyens d'encliquetage pour assembler le boîtier arrière au boîtier avant.

Le dispositif d'alimentation peut être intégré directement dans l'enveloppe de la lampe, ou être logé dans un module auxiliaire extérieur relié à la lampe par une liaison électrique.

Le module d'éclairage de la lampe peut être équipé d'au moins un composant émetteur de lumière, notamment une diode électroluminescente LED, ou une ampoule.

### État de la technique

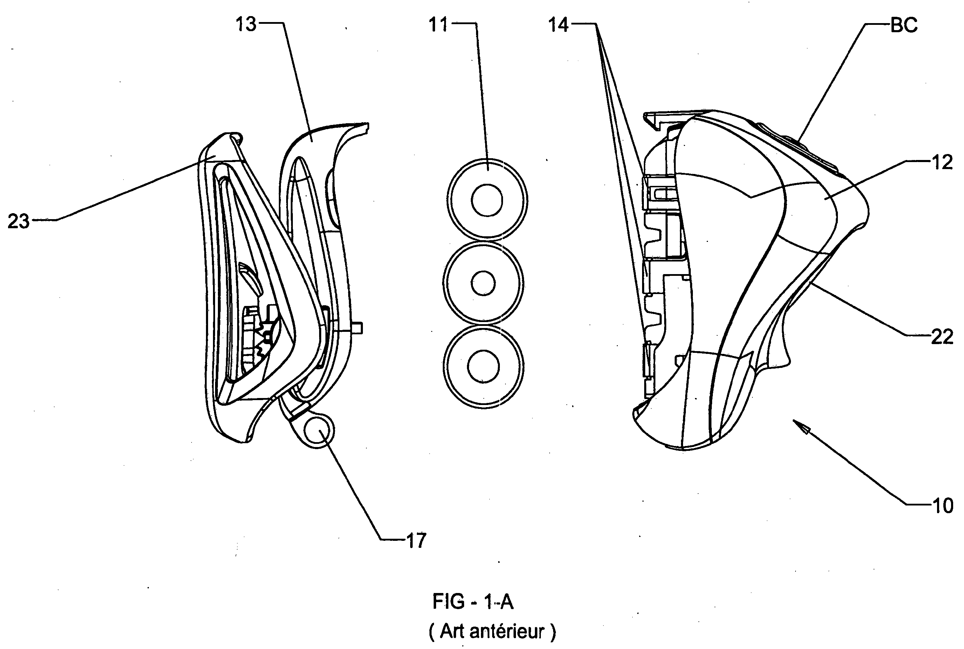

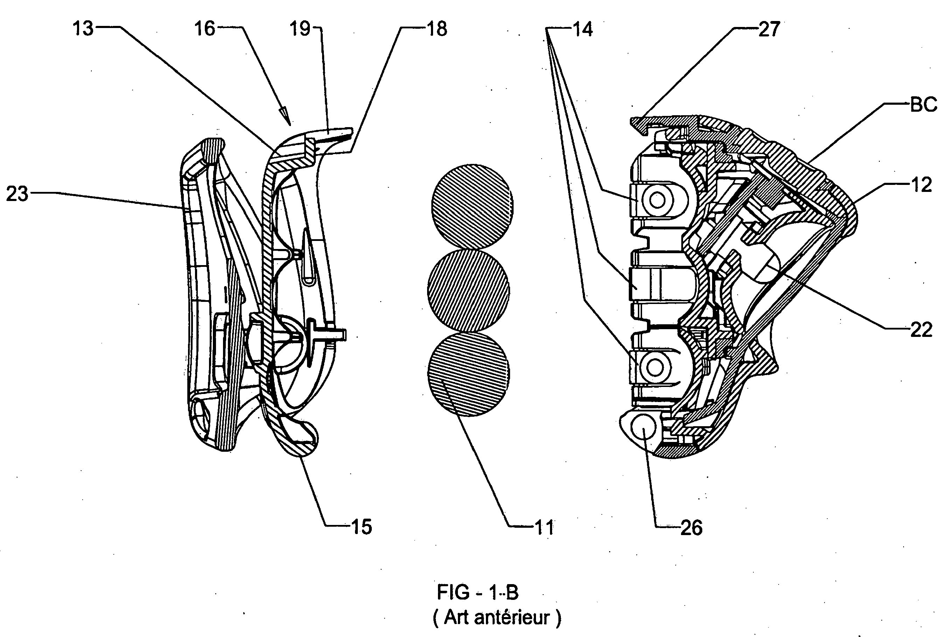

Les figures 1A et 1B montrent une lampe 10 d'éclairage du premier type à dispositif d'alimentation intégré avec le module d'éclairage 22, lequel fonctionne avec des piles 11 cylindriques placées entre des contacts 14 dans des alvéoles du boîtier avant 12 pour former une source d'énergie à courant continu. Les contacts 14 sont en liaison directe avec le module d'éclairage 22, et le boîtier arrière 13 est rapporté sur le boîtier avant 12 pour fermer le compartiment des piles 11 pour la mise en service de la lampe. Le boîtier arrière 13 peut aussi être démonté pour l'enlèvement des piles 11 usagées, et la mise en place de piles neuves. Le boîtier arrière 13 comporte à cet effet des premiers moyens d'articulation 15 à la partie inférieure, et des premiers moyens d'encliquetage 16 à la partie supérieure.

Une platine 23 est montée à pivotement à la base du boîtier arrière 13 pour la fixation d'une sangle élastique lors du portage en lampe frontale. La platine 23 peut être remplacée par tout autre moyen d'attache, notamment un système enrouleur à bande ou à fil.

Les premiers moyens d'articulation 15 du boîtier arrière 13 sont constitués par un axe transversal formé par une paire de tétons 17 opposés, destinés à être engagés dans des premiers orifices 26 alignés du boîtier avant 12 pour permettre un mouvement de basculement relatif entre les deux boîtiers 12, 13.

Les premiers moyens d'encliquetage 16 à la partie supérieure du boîtier arrière 13 comportent un premier ergot de retenue 18 ménagé dans une encoche 19 du corps de boîtier 13. Lors de l'assemblage des deux boîtiers 12, 13, l'ergot de retenue 18 vient se verrouiller en fin de course de basculement sur un premier crochet 27 élastique du boîtier avant 12 pour former un clip. Ce clip de fermeture peut bien entendu être déverrouillé manuellement par soulèvement du crochet pour libérer le premier ergot 18 et ouvrir le boîtier arrière 13 par basculement lors du remplacement des piles 11.

Les piles 11 peuvent être des piles classiques rechargeables ou non, qu'il faut recharger ou remplacer respectivement en fin de décharge, ou en fin de vie.

Certaines lampes renferment un bloc accumulateur interne à la place des piles 11. Un bloc accumulateur possède une plus grande autonomie, mais nécessite généralement un volume de logement supérieur à celui utilisé pour des piles 11. Il peut être équipé d'une borne ou prise pouvant être raccordée électriquement par un connecteur spécial à un chargeur extérieur destiné à recharger le bloc accumulateur resté en place à l'intérieur de la lampe.

Les boîtiers des lampes à piles et des lampes à bloc accumulateur sont spécifiques, et nécessitent deux gammes de produits augmentant le coût de fabrication et compliquant la gestion de production et de stockage.

Le même problème se pose pour les lampes du deuxième type ayant un module auxiliaire extérieur d'alimentation relié à la lampe par une liaison électrique à fils conducteurs. Deux boîtiers d'alimentation spécifiques sont nécessaires selon que les lampes utilisent des piles classiques ou un bloc accumulateur rechargeable.

Un autre inconvénient pour l'utilisateur est la défaillance du dispositif d'alimentation électrique lors d'une randonnée, car le remplacement du bloc accumulateur déchargé par des piles neuves classiques, n'est pas possible sur la même lampe si le boîtier n'est pas prévu pour cette substitution. Il en est de même pour l'opération inverse de remplacement de piles classiques usagées ou déchargées par un bloc accumulateur chargé.

Le document FR 2650123 décrit un boîtier pour piles électriques cylindriques de différents diamètres pour l'alimentation d'une lampe portative. Il renferme des moyens d'ajustage munis d'entretoises pivotantes destinées à occuper deux positions distinctes selon le diamètre des piles.

Le document US 5600223 se rapporte à un boîtier de piles pour un terminal portable avec deux jeux de piles connectés en parallèle. Le document US 4977042 concerne un rasoir à batterie rechargeable.

### Objet de l'invention

L'objet de l'invention consiste à réaliser un dispositif d'alimentation pour une lampe électrique portative, facilement adaptable par l'utilisateur à une source d'énergie à piles ou à bloc accumulateur, sans modifier les pièces constitutives du boîtier de la lampe.

Le dispositif d'alimentation selon l'invention est caractérisé en ce que le bloc accumulateur est logé dans une enveloppe isolante pour constituer une seule pièce intercalaire insérable entre le boîtier avant et le boîtier arrière, ladite enveloppe comportant des deuxièmes moyens d'articulation et des deuxièmes moyens d'encliquetage destinés à coopérer avec lesdits premiers moyens du système de fixation lorsque le bloc accumulateur vient se mettre en lieu et place des piles.

Pour une lampe d'éclairage du premier type à dispositif d'alimentation intégré avec le module d'éclairage, l'utilisateur peut ainsi faire usage :
- soit de piles classiques type LR03 placées dans le boîtier avant, le boîtier arrière étant encliqueté sur ce dernier par l'intermédiaire d'une charnière sur le dessous et d'un clip sur le dessus ;
- soit d'un bloc accumulateur qui vient se mettre en lieu et place des piles. Le bloc accumulateur s'encliquette sur le boîtier avant par l'intermédiaire d'une charnière sur le dessous et d'un clip sur le dessus. Le boîtier arrière vient ensuite se clipper sur la face opposée du bloc accumulateur par l'intermédiaire d'une charnière sur le dessous et d'un clip sur le dessus.

Selon un mode de réalisation préférentiel, les deuxièmes moyens d'articulation du bloc accumulateur comportent un axe transversal formé par une paire de deuxièmes tétons insérables dans des premiers orifices du boîtier avant, et une paire de deuxièmes orifices pour l'insertion d'un axe transversal formé par une paire de premiers tétons du boîtier arrière. Les deuxièmes tétons et les deuxièmes orifices sont disposés côte à côte à la partie inférieure du bloc accumulateur, lesdits premiers et deuxièmes orifices respectifs du boîtier avant et du bloc accumulateur étant identiques pour recevoir soit les premiers tétons du boîtier arrière lors de l'usage de piles classiques, soit les deuxièmes tétons du bloc accumulateur. Les deuxièmes moyens d'encliquetage du bloc accumulateur, comportent un deuxième ergot destiné à se clipper en fin de course de basculement sur un premier crochet élastique du boîtier avant, et un deuxième crochet élastique pouvant se verrouiller sur le premier ergot de retenue du boîtier arrière

De préférence, le deuxième ergot et le deuxième crochet sont agencés côte à côte à la partie supérieure du bloc accumulateur, en étant séparés l'un de l'autre par une distance prédéterminée correspondant à celle séparant à la partie inférieure les deuxièmes tétons des deuxièmes orifices.

Le premier crochet du boîtier avant et le deuxième crochet du bloc accumulateur présentent des structures identiques, et coopèrent respectivement avec le deuxième ergot de retenue du bloc accumulateur et le premier ergot de retenue du boîtier arrière, alors que ce dernier est encliqueté directement sur le premier crochet élastique du boîtier avant lors du remplacement du bloc accumulateur par des piles.

L'invention est applicable à une lampe électrique portative à dispositif d'alimentation intégré, ou à une lampe portative reliée par une liaison électrique à un module auxiliaire extérieur renfermant le dispositif d'alimentation.

### Description sommaire des dessins

D'autres avantages et caractéristiques ressortiront plus clairement de la description qui va suivre de différents modes de réalisation de l'invention donnés à titre d'exemples non limitatifs et représentés aux dessins annexés, dans lesquels :
- la figure 1A est une vue en perspective éclatée d'une lampe électrique portative de l'art antérieur, alimentée par des piles intégrées jetables ou rechargeables ;
- la figure 1B est une vue en coupe de la figure 1A ;
- la figure 2 représente une vue identique de la figure 1, après avoir remplacé les piles par un bloc accumulateur selon l'invention ;
- les figures 3 à 5 montrent des vues en coupe des trois ensembles constituant le boîtier avant, le bloc accumulateur, et le boîtier arrière de la figure 2, respectivement en position basculée après déverrouillage des clips, en position assemblée après encliquetage, et en position séparée après démontage des charnières ;
- les figures 6 et 7 illustrent deux autres vues en perspective et en profil de la lampe entrouverte selon la figure 3;
- la figure 8 représente une vue en plan de la lampe de la figure 4 en position assemblée ;
- la figure 9 est une vue du dispositif d'alimentation logé dans un module auxiliaire extérieur relié à la lampe par une liaison électrique.

### Description détaillée de l'invention

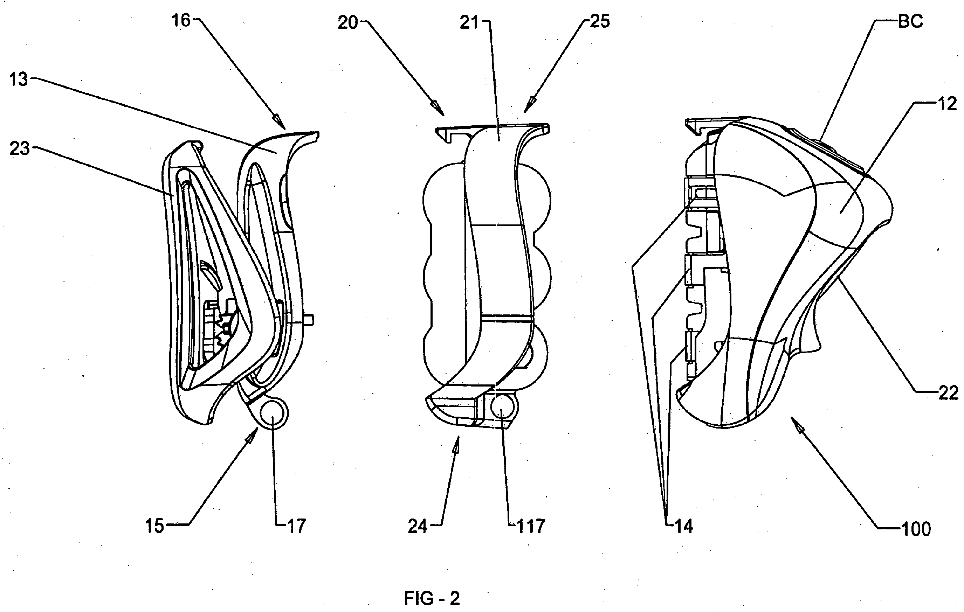

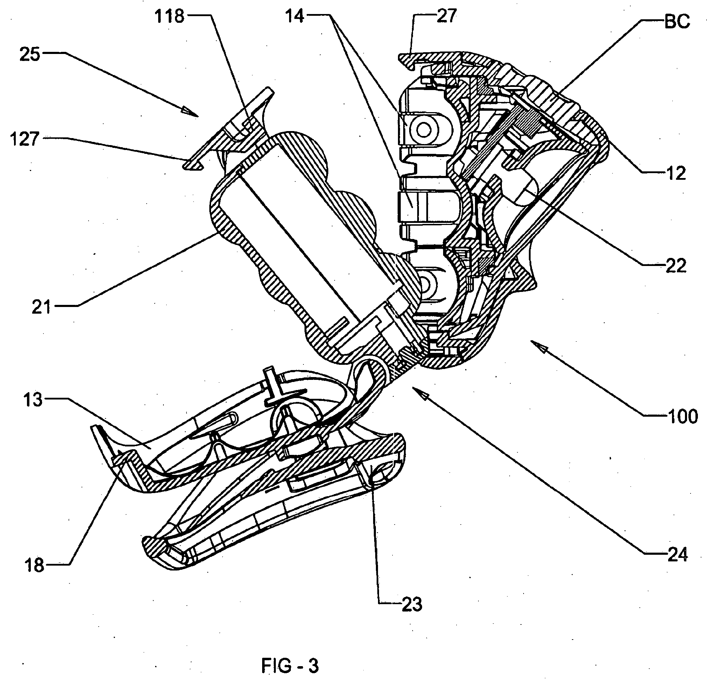

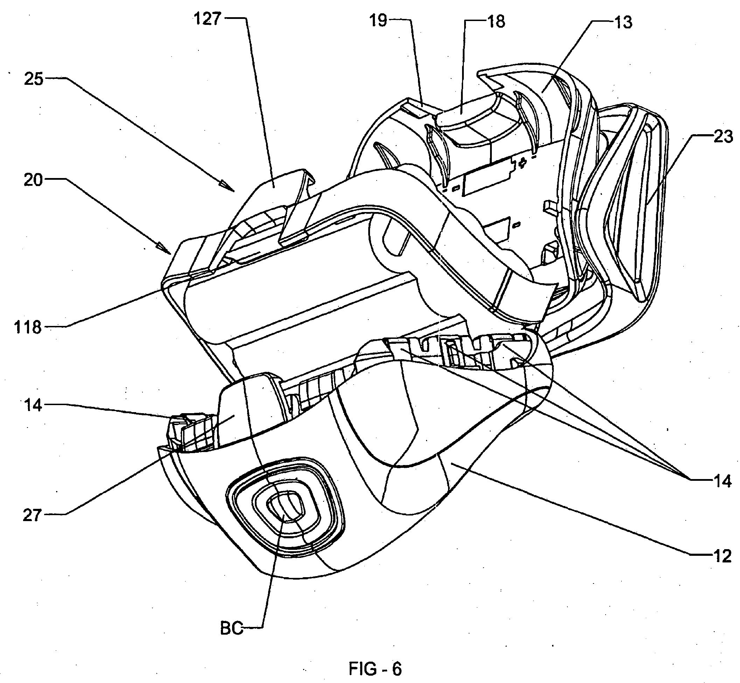

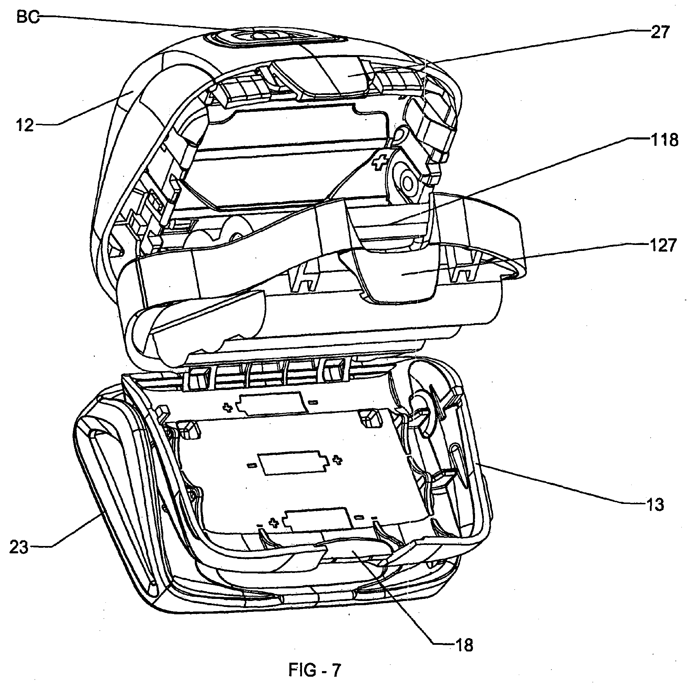

En référence aux figures 2 à 8, une lampe 100 d'éclairage électrique, notamment une lampe frontale, comporte le même boîtier avant 12 et le même boîtier arrière 13 que ceux de la lampe 10 de la figure 1B, mais les piles 11 individuelles sont remplacées par un bloc accumulateur 20 rechargeable. La lampe 100 nécessite un volume intercalaire supérieur à celui des piles 11, car le bloc accumulateur 20 est logé dans une enveloppe 21 en matière isolante ayant un encombrement plus important.

Dans cette lampe 100 du premier type à bloc accumulateur 20 intégré, les mêmes numéros de repères seront utilisés pour désigner des pièces identiques ou similaires à celles de la figure 1B. Le boîtier avant 12 avec son module d'éclairage 22 et son bouton de commande BC, et le boîtier arrière 13 avec sa platine 23 sont les mêmes que ceux de la lampe 10 à piles de la figure 1B, sans aucune modification.

Le bloc accumulateur 20 est logé dans l'enveloppe 21 en matière isolante pour constituer une seule pièce monobloc. L'enveloppe 21 est équipée à sa base de deuxièmes moyens d'articulation 24, et à sa partie supérieure de deuxièmes moyens d'encliquetage 25.

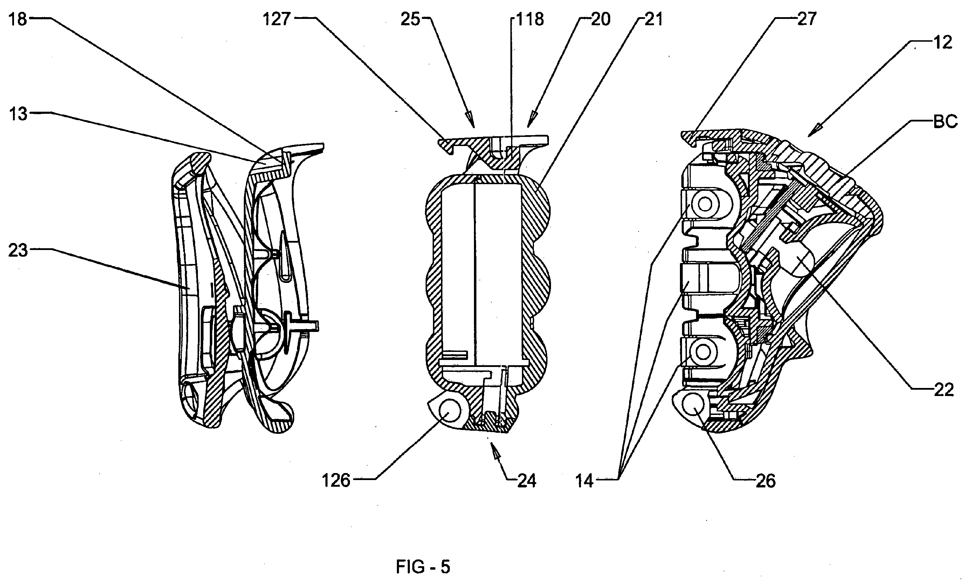

Les deuxièmes moyens d'articulation 24 du bloc accumulateur 20 sont composés :
- d'un axe transversal (voir figure 2) formé par une paire de tétons 117 opposés, destinés à être engagés dans les premiers orifices 26 alignés (voir figure 5) du boîtier avant 12 pour permettre un mouvement de basculement relatif entre le boîtier avant 12 et le bloc accumulateur 20 ;
- et d'une paire de deuxièmes orifices 126 opposés (voir figure 5) alignés selon une direction parallèle par rapport aux tétons 117 en étant décalés de ces derniers par une faible distance.

Les orifices 26, 126 respectifs du boîtier avant 12 et du bloc accumulateur 20 sont identiques, et peuvent recevoir soit les premiers tétons 17 du boîtier arrière 13 lors de l'usage de piles 11 classiques avec la lampe 10 de la figure 1B, soit les deuxièmes tétons 117 du bloc accumulateur 20 dans le cas de la lampe 100 de la figure 2.

Les deuxièmes moyens d'encliquetage 25 à la partie supérieure du bloc accumulateur 20, comportent :
- un deuxième ergot 118 destiné à se clipper en fin de course de basculement sur le premier crochet 27 élastique du boîtier avant 12,
- un deuxième crochet 127 élastique pouvant se verrouiller sur le premier ergot 18 de retenue du boîtier arrière 13.

Le deuxième ergot 118 et le deuxième crochet 127 sont agencés côte à côte à la partie supérieure du bloc accumulateur 20, en étant séparés l'un de l'autre par une distance prédéterminée correspondant à celle séparant à la partie inférieure les deuxièmes tétons 117 des deuxièmes orifices 126.

Le premier crochet 27 du boîtier avant 12 et le deuxième crochet 127 du bloc accumulateur 20 sont identiques, et coopèrent respectivement avec le deuxième ergot de retenue 118 et le premier ergot de retenue 18 lors de l'usage du bloc accumulateur 20 de la lampe 100 de la figure 2. Lors de l'usage avec des piles 11 classiques de la figure 1B, le premier ergot de retenue 18 du boîtier arrière 13 est encliqueté directement sur le premier crochet 27 élastique du boîtier avant 12.

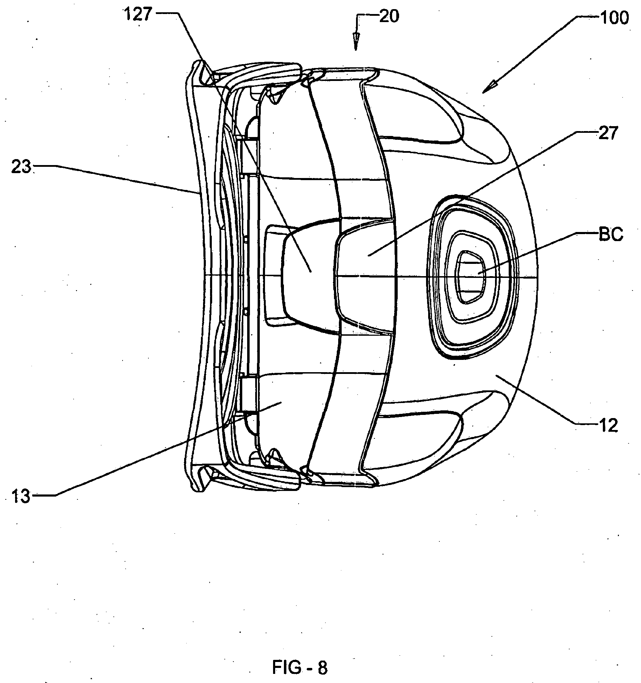

Sur la figure 8, l'assemblage final de la lampe 100 avec le bloc accumulateur 20 montre l'augmentation du volume intercalaire par rapport à celui de la lampe 10 de la figure 1B. Le boîtier avant 12 et le boîtier arrière 13 restent standards, et l'utilisateur peut donc adapter facilement une source d'énergie à piles ou à bloc accumulateur, sans modifier les pièces constitutives du boîtier de la lampe.

La présence du bloc accumulateur 20 doté de l'association du deuxième crochet 127 et du deuxième ergot 118, et de l'association des deuxièmes tétons 117 et des deuxièmes orifices 126, permet de faire usage des mêmes moyens d'articulation et d'encliquetage entre les deux boîtiers 12, 13.

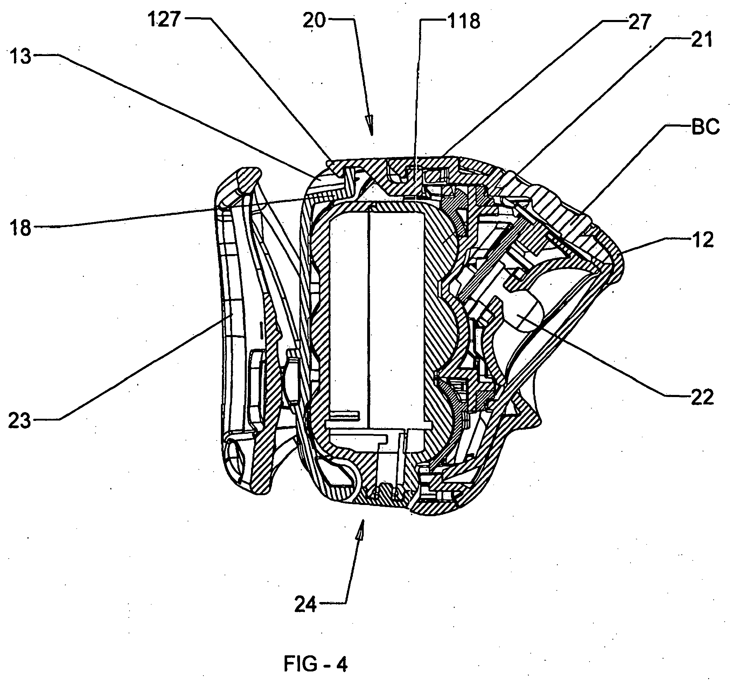

Sur les figures 4 et 8, lorsque le bloc accumulateur 20 de la lampe 100 tombe en panne en cours de randonnée, l'utilisateur peut le remplacer facilement par des piles 11 classiques. Il suffit qu'il déverrouille les premier et deuxième crochets 27, 127 à la partie supérieure pour faire basculer les boîtiers 12, 13 et bloc accumulateur 20, et qu'il sorte ensuite à la partie inférieure les tétons 17, 117 des orifices 126, 26 correspondants pour séparer totalement les trois ensembles, comme le montre la figure 2.
Des piles 11 classiques neuves ou rechargées peuvent alors être insérées entre les contacts 14. La lampe est refermée en fixant le boîtier arrière 13 au boîtier avant 12 comme dans la figure 1B.

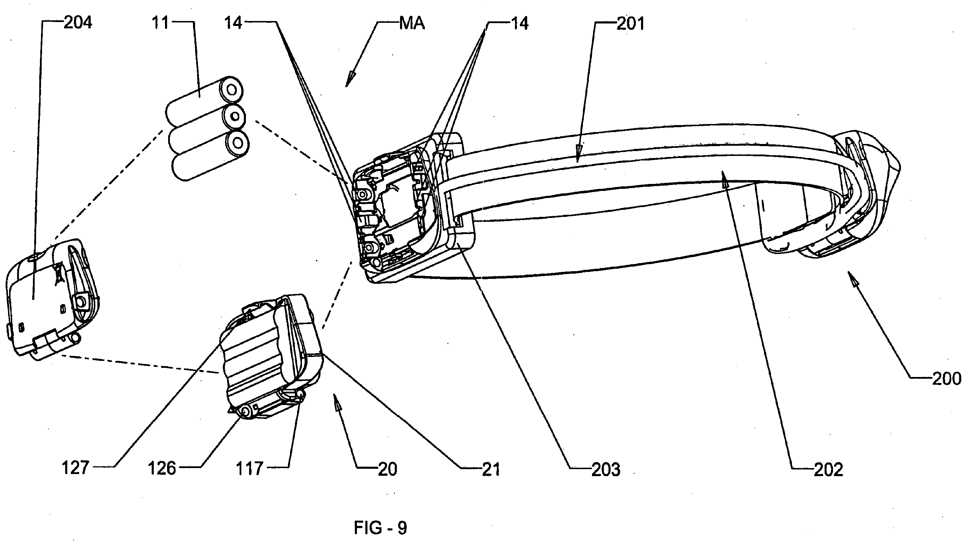

Selon la figure 9, le même concept est applicable à une lampe 200 du deuxième type ayant un module auxiliaire MA extérieur d'alimentation relié à la lampe par une liaison électrique 201 et une sangle d'attache 202 ou un enrouleur. L'un des boîtiers 203 du module auxiliaire extérieur est alors dépourvu d'organes d'éclairage, et l'autre 204 servant de couvercle n'aura pas de platine 23. Le module auxiliaire extérieur d'alimentation peut ainsi être muni de piles 11 ou d'un bloc accumulateur 20 en utilisant les mêmes moyens d'articulation et d'encliquetage entre les deux boîtiers 203, 204.

## Revendications

1. Dispositif d'alimentation à piles ou accumulateur pour une lampe d'éclairage (10, 100, 200) électrique portative, ledit dispositif étant composé :
- d'un boîtier avant (12, 203) renfermant un système de contacts (14) électriques destinés à être connectés électriquement à un module d'éclairage (22),
- d'un boîtier arrière (13, 204) conformé en couvercle,
- et d'un système de fixation comprenant des premiers moyens d'articulation (15) et des premiers moyens d'encliquetage (16) pour assembler le boîtier arrière (13, 204) au boîtier avant (12, 203),
**caractérisé en ce que** le dispositif comporte en outre un bloc accumulateur (20), lequel est logé dans une enveloppe (21) isolante pour constituer une seule pièce intercalaire insérable entre le boîtier avant (12, 203) et le boîtier arrière (13, 204), ladite enveloppe comportant des deuxièmes moyens d'articulation (24) et des deuxièmes moyens d'encliquetage (25) destinés à coopérer avec lesdits premiers moyens du système de fixation lorsque le bloc accumulateur (20) vient se mettre en lieu et place des piles (11).

2. Dispositif d'alimentation à piles ou à bloc accumulateur selon la revendication 1, **caractérisé en ce que** les deuxièmes moyens d'articulation (24) du bloc accumulateur (20) comportent un axe transversal formé par une paire de deuxièmes tétons (117) insérables dans des premiers orifices (26) du boîtier avant (12), et une paire de deuxièmes orifices (126) pour l'insertion d'un axe transversal formé par une paire de premiers tétons (17) du boîtier arrière (13).

3. Dispositif d'alimentation à piles ou à bloc accumulateur selon la revendication 2, **caractérisé en ce que** les deuxièmes tétons (117) et les deuxièmes orifices (126) sont disposés côte à côte à la partie inférieure du bloc accumulateur (20), lesdits premiers et deuxièmes orifices (26, 126) respectifs du boîtier avant (12) et du bloc accumulateur (20) étant identiques pour recevoir soit les premiers tétons (17) du boîtier arrière (13) lors de l'usage de piles (11) classiques, soit les deuxièmes tétons (117) du bloc accumulateur (20).

4. Dispositif d'alimentation à piles ou à bloc accumulateur selon la revendication 1 ou 3, **caractérisé en ce que** les deuxièmes moyens d'encliquetage (25) du bloc accumulateur (20), comportent un deuxième ergot (118) destiné à se clipper en fin de course de basculement sur un premier crochet (27) élastique du boîtier avant (12), et un deuxième crochet (127) élastique pouvant se verrouiller sur le premier ergot (18) de retenue du boîtier arrière (13).

5. Dispositif d'alimentation à piles ou à bloc accumulateur selon la revendication 4, **caractérisé en ce que** le deuxième ergot (118) et le deuxième crochet (127) sont agencés côte à côte à la partie supérieure du bloc accumulateur (20), en étant séparés l'un de l'autre par une distance prédéterminée correspondant à celle séparant à la partie inférieure les deuxièmes tétons (117) des deuxièmes orifices (126).

6. Dispositif d'alimentation à piles ou à bloc accumulateur selon la revendication 5, **caractérisé en ce que** le premier crochet (27) du boîtier avant (12) et le deuxième crochet (127) du bloc accumulateur (20) sont identiques, et coopèrent respectivement avec le deuxième ergot de retenue (118) du bloc accumulateur (20) et le premier ergot de retenue (18) du boîtier arrière (13), alors que ce dernier est encliqueté directement sur le premier crochet (27) élastique du boîtier avant (12) lors du remplacement du bloc accumulateur (20) par des piles (11).

7. Lampe électrique (100) portative à dispositif d'alimentation intégré selon l'une des revendications précédentes.

8. Lampe électrique (200) portative reliée par une liaison électrique (201) à un module auxiliaire (MA) extérieur renfermant un dispositif d'alimentation selon l'une des revendications 1 à 6.

## Patentansprüche

1. Batterien- oder akkubetriebene Stromversorgungsvorrichtung für eine tragbare elektrische Lampe (10, 100, 200), welche Vorrichtung umfasst:
- ein vorderes Gehäuse (12, 203), das eine Reihe elektrischer Kontakte (14) einschließt, die dazu bestimmt sind, an ein Beleuchtungsmodul (22) elektrisch angeschlossen zu werden,
- ein hinteres Gehäuse (13, 204), das als Deckel ausgebildet ist,
- und ein Befestigungssystem, das erste Anlenkmittel (15) und erste Einrastmittel (16) zum Verbinden des hinteren Gehäuses (13, 204) mit dem vorderen Gehäuse (12, 203) umfasst,
**dadurch gekennzeichnet, dass** die Vorrichtung ferner einen Akkumulatorblock (20) umfasst, der sich in einer isolierenden Hülle (21) befindet, um ein einziges Zwischenteil zu bilden, das zwischen dem vorderen Gehäuse (12, 203) und dem hinteren Gehäuse (13, 204) eingesetzt werden kann, welche Hülle zweite Anlenkmittel (24) und zweite Einrastmittel (25) umfasst, die dazu bestimmt sind, mit den genannten ersten Mitteln des Befestigungssystems zusammenzuwirken, wenn der Akkumulatorblock (20) die Batterien (11) ersetzen soll.

2. Stromversorgungsvorrichtung mit Batterien oder Akkumulatorblock nach Anspruch 1, **dadurch gekennzeichnet, dass** die zweiten Anlenkmittel (24) des Akkumulatorblocks (20) eine transversale Achse bilden, die von einem Paar zweiter Zapfen (117) gebildet wird, die in erste Öffnungen (26) des vorderen Gehäuses (12) eingeführt werden können, und einem zweiten Paar Öffnungen (126) zum Einfügen einer transversalen Achse, die von einem Paar erster Zapfen (17) des hinteren Gehäuses (13) gebildet wird.

3. Stromversorgungsvorrichtung mit Batterien oder Akkumulatorblock nach Anspruch 2, **dadurch gekennzeichnet, dass** die zweiten Zapfen (117) und die zweiten Öffnungen (126) im unteren Bereich des Akkumulatorblocks (20) nebeneinander angeordnet sind, wobei die jeweiligen ersten und zweiten Öffnungen (26, 126) des vorderen Gehäuses (12) und des Akkumulatorblocks (20) identisch sind, um entweder die ersten Zapfen (17) des hinteren Gehäuses (13) beim Einsatz herkömmlicher Batterien (11) oder die zweiten Zapfen (117) bei Verwendung des Akkumulatorblocks (20) aufzunehmen.

4. Stromversorgungsvorrichtung mit Batterien oder Akkumulatorblock nach Anspruch 1 oder 3, **dadurch gekennzeichnet, dass** die zweiten Einrastmittel (25) des Akkumulatorblocks (20) einen zweiten Nocken (118) aufweisen, der dazu bestimmt ist, sich am Ende der Schwenkbewegung um einen ersten elastischen Haken (27) des vorderen Gehäuses (12) zu clipsen, und einen zweiten elastischen Haken (127), der sich am ersten Rückhaltenocken (18) des hinteren Gehäuses (13) verriegeln kann.

5. Stromversorgungsvorrichtung mit Batterien oder Akkumulatorblock nach Anspruch 4, **dadurch gekennzeichnet, dass** der zweite Nocken (118) und der zweite Haken (127) im oberen Bereich des Akkumulatorblocks (20) nebeneinander angeordnet sind und voneinander durch einen vorbestimmten Abstand getrennt sind, der demjenigen entspricht, der im unteren Bereich die zweiten Zapfen (117) von den zweiten Öffnungen (126) trennt.

6. Stromversorgungsvorrichtung mit Batterien oder Akkumulatorblock nach Anspruch 5, **dadurch gekennzeichnet, dass** der erste Haken (27) des vorderen Gehäuses (12) und der zweite Haken (127) des Akkumulatorblocks (20) identisch sind und jeweils mit dem zweiten Rückhaltenocken (118) des Akkumulatorblocks (20) und dem ersten Rückhaltenocken (18) des hinteren Gehäuses (13) zusammenwirken, während letzterer beim Ersetzen des Akkumulatorblocks (20) durch Batterien (11) direkt am ersten elastischen Haken (27) des vorderen Gehäuses (12) einrastet.

7. Tragbare elektrische Lampe (100) mit integrierter Stromversorgungsvorrichtung nach einem der vorstehenden Ansprüche.

8. Tragbare elektrische Lampe (200), die über eine Elektroverbindung (201) an ein äußeres Hilfsmodul (MA) angeschlossen ist, das eine Stromversorgungsvorrichtung nach einem der Ansprüche 1 bis 6 enthält.

## Claims

1. A device for power supply of a portable electric lighting lamp (10, 100, 200) by batteries (11) or a storage battery unit (20), said device being composed:
- of a front case (12, 203) housing a system of electric contacts (14) for being electrically connected to the lighting module (22),
- of a rear case (13, 204) in the form of a cover,
- and of a fixing system comprising first articulation means (15) and first clip-fastening means (16) to secure the rear case (13, 204) to the front case (12, 203),
**characterized in that** the device further comprises a storage battery unit (20) which is housed in an insulating enclosure (21) to constitute a single intercalated part able to be inserted between the front case (12, 203) and the rear case (13, 204), said enclosure comprising second articulation means (24) and second clip-fastening means (25) designed to operate in conjunction with said first means of the fixing system when the storage battery unit (20) is fitted instead of and in place of the batteries (11).

2. The device for power supply by batteries or a storage battery unit according to claim 1, **characterized in that** the second articulation means (24) of the storage battery unit (20) comprise a transverse spindle formed by a pair of second pins (117) able to be inserted in first holes (26) of the front case (12), and a pair of second holes (126) for insertion of a transverse spindle formed by a pair of first pins (17) of the rear case (13).

3. The device for power supply by batteries or a storage battery unit according to claim 2, **characterized in that** the second pins (117) and the second holes (126) are arranged side by side at the bottom part of the storage battery unit (20), said respective first and second holes (26, 126) of the front case (12) and of the storage battery unit (20) being identical to receive either first pins (17) of the rear case (13) when conventional batteries (11) are used, or the second pins (117) of the storage battery unit (20).

4. The device for power supply by batteries or a storage battery unit according to claim 1 or 3, **characterized in that** the second clip-fastening means (25) of the storage battery unit (20) comprise a second spigot (118) designed to be clipped onto a first flexible latch (27) of the front case (12) at the end of swivelling travel, and a second flexible latch (127) able to be latched on the first securing spigot (18) of the rear case (13).

5. The device for power supply by batteries or a storage battery unit according to claim 4, **characterized in that** the second spigot (118) and the second latch (127) are arranged side by side at the top part of the storage battery unit (20), being separated from one another by a preset distance corresponding to the distance separating the second pins (117) from the second holes (126) in the bottom part.

6. The device for power supply by batteries or a storage battery unit according to claim 5, **characterized in that** the first latch (27) of the front case (12) and the second latch (127) of the storage battery unit (20) are identical and operate respectively in conjunction with the second securing spigot (118) of the storage battery unit (20) and with the first securing spigot (18) of the rear case (13), whereas the latter is clipped directly onto the first flexible latch (27) of the front case (12) when the storage battery unit (20) is replaced by batteries (11).

7. A portable electric lamp (100) with an integrated power supply device according to one of the foregoing claims.

8. A portable electric lamp (200) connected by an electrical connection (201) to an external auxiliary module (MA) housing a power supply device according to one of claims 1 to 6.
